(19) Europäisches Patentamt
European Patent Office
Office européen des brevets

(11) **EP 4 776 526 A2**

(12) **EUROPEAN PATENT APPLICATION**

(43) Date of publication:
**15.07.2026 Bulletin 2026/29**

(21) Application number: **26181210.1**

(22) Date of filing: **01.04.2022**

(51) International Patent Classification (IPC):
***H04B 7/06** (2006.01)*

(52) Cooperative Patent Classification (CPC):
**H04B 7/0626**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.04.2021 US 202163171765 P**

(62) Document number(s) of the earlier application(s) in accordance with Art. 76 EPC:
**22719113.7 / 4 320 743**

(71) Applicant: **NTT DOCOMO, INC.**
**Tokyo 100-6150 (JP)**

(72) Inventors:
- **RUPASINGHE, Nadisanka**
**Palo Alto, CA, 94304 (US)**
- **MATSUMURA, Yuki**
**Tokyo, 100-6150 (JP)**

(74) Representative: **Hoffmann Eitle**
**Patent- und Rechtsanwälte PartmbB**
**Arabellastraße 30**
**81925 München (DE)**

Remarks:
This application was filed on 27-05-2026 as a divisional application to the application mentioned under INID code 62.

(54) **METHODS OF CSI REPORTING FOR 5G NR REL. 17 TYPE II PORT SELECTION CODEBOOK**

(57) A wireless communication method for a User Equipment (UE) is disclosed that includes receiving, via downlink control information (DCI) or higher layer signaling, configuration information and configuring a format for a Channel State Information (CSI) report based on the configuration information and based on whether a bitmap is being reported from the UE. The CSI report includes part 1 and part 2. The Part 1 has a fixed payload size and is used to identify the number of information bits in the part 2.

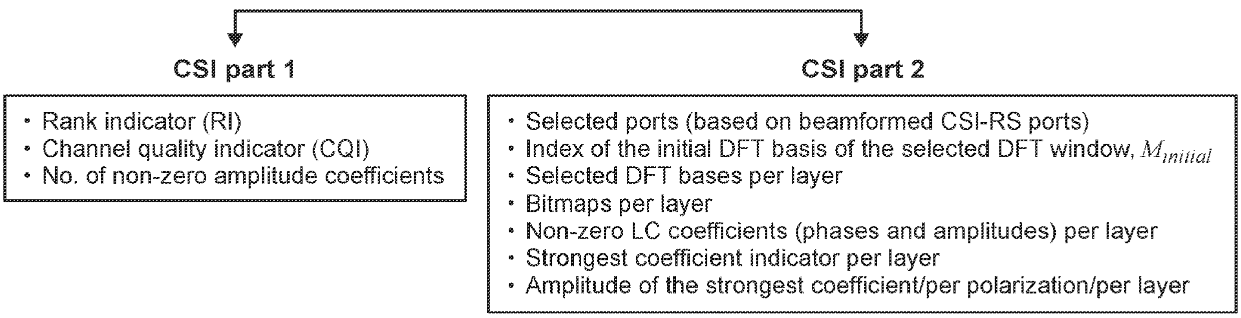


*FIG. 7*

EP 4 776 526 A2

## Description

### BACKGROUND

#### Technical Field

One or more embodiments disclosed herein relate to methods of enhancing Type II port selection codebook for higher rank transmissions.

#### Description of Related Art

New Radio (NR) supports Type II channel state information (CSI) feedback for rank 1 and rank 2 (Release 15 of NR).
One or more new working items relating to NR Multiple Input Multiple Output (MIMO) for Release 17 of NR identify requirements for further enhancing a Type II port selection codebook.
For example, with regard to enhancement on CSI measurement and reporting it may be evaluated and, if needed, specify CSI reporting for DL multi-TRP and/or multi-panel transmission to enable more dynamic channel/interference hypotheses for NCJT, targeting both FR1 and FR2.
Further, it may be evaluated and, if needed, specify Type II port selection codebook enhancement (based on Rel. 15/16 Type II port selection) where information related to angle(s) and delay(s) are estimated at the gNode-B (gNB) based on Sounding Reference Signal (SRS) by utilizing downlink (DL)/uplink (UL) reciprocity of angle and delay, and the remaining DL Channel State Information (CSI) is reported by the user equipment (UE), mainly targeting Frequency Division Duplexing (FDD) Frequency Range 1 (FR1) to achieve better trade-off among UE complexity, performance and reporting overhead.
In other words, discussed herein is how the Type II port selection codebook may be further extended by mapping multiple spatial domain (SD) - frequency domain (FD) base pairs to a CSI-RS port for DL beamforming.

#### Citation List

#### Non-Patent References

[Non-Patent Reference 1] 3GPP RP 193133, "New WID: Further enhancements on MIMO for NR", Dec., 2019.
[Non-Patent Reference 2] 3GPP RAN1 #104-e, 'Chairman's Notes', Feb., 2021.
[Non-Patent Reference 3] 3GPP TS 38.214, "NR; Physical procedure for data (Release 16)."


### SUMMARY

One or more embodiments of the present invention provide a wireless communication method for a User Equipment (UE) that includes receiving, via downlink control information (DCI) or higher layer signaling, configuration information and configuring a format for a Channel State Information (CSI) report based on the configuration information and based on whether a bitmap is being reported from the UE to a base station. The CSI report includes part 1 and part 2, and the part 1 has a fixed payload size and is used to identify a number of information bits in the part 2.
In one or more embodiments, when the bitmap is being reported, the part 1 includes a rank indicator (RI), channel quality information (CQI), and an indication of an overall number of non-zero amplitude coefficients across layers. In one or more embodiments, the RI, CQI, and indication of the overall number of non-zero amplitude coefficients across layers are encoded separately.
In one or more embodiments, when the bitmap is being reported, the part 2 includes the bitmap. In one or more embodiments, when the bitmap is not being reported, the part 1 includes the RI and CQI, but does not include the indication of the overall number of non-zero amplitude coefficients across layers. In one or more embodiments, the RI and CQI are encoded separately.
In one or more embodiments, the part 2 includes a precoding matrix indicator (PMI). In one or more embodiments, when the bitmap is being reported, the part 2 includes the bitmap. In one or more embodiments, the UE determines whether to report the bitmap based on an instruction from the base station.
In one or more embodiments, the part 1 and the part 2 are encoded separately. In one or more embodiments, when the bitmap is not being reported, indices of the PMI are associated with different CSI information corresponding to the part 2. In one or more embodiments, information in the part 2 is grouped into groups each associated with a different index.

One or more embodiments of the present invention provide a UE that includes a receiver that receives, via DCI or higher layer signaling, configuration information and a processor that configures a format for a CSI report based on the configuration information and based on whether a bitmap is being reported from the UE to a base station. The CSI report includes part 1 and part 2, and the part 1 has a fixed payload size and is used to identify the number of information bits in the part 2.

One or more embodiments of the present invention provide a base station that includes a transmitter that transmits to a UE, via DCI or higher layer signaling, configuration information and a processor that controls to receive a CSI report having a format that is configured based on the configuration information and based on whether a bitmap is being reported from the UE to the base station. The CSI report includes part 1 and part 2, and the part 1 has a fixed payload size and is used to identify the number of information bits in the part 2.

Advantageously, enhancements on CSI measurement and reporting are being discussed in the development of Release 17 of NR. One of such enhancements includes evaluating and, if needed, specifying CSI reporting for Downlink (DL) multi-Transmission Reception Points (TRP) and/or multi-panel transmission to enable more dynamic channel/interference hypotheses for non-coherent joint transmission (NCJT), targeting both Frequency Range 1 (FR1) (i.e., 410 MHz to 7,125 MHz, sub-6 GHz) and Frequency Range 2 (FR2) (i.e., 24,250 MHz to 52,600 MHz, mmWaves). Another of such enhancements includes evaluating and, if needed, specifying Type II port selection codebook enhancements (based on Rel.15/16 Type II port selection) where information related to angle(s) and delay(s) are estimated at a gNB based on a Sound Reference Signal (SRS) by utilizing DL/Uplink (UL) reciprocity of angle and delay. The remaining DL CSI is reported by the UE, mainly targeting Frequency Division Duplex (FDD) FR1 to achieve better trade-off among UE complexities, performance, and reporting overhead.

Other embodiments and advantages of the present invention will be recognized from the description and figures.

BRIEF DESCRIPTION OF THE DRAWINGS

FIG. 1 is a diagram showing a schematic configuration of a wireless communication system according to embodiments.

FIG. 2 is a diagram showing a schematic configuration of a base station (BS) according to one or more embodiments.

FIG. 3 is a schematic configuration of a user equipment (UE) according to one or more embodiments.

FIG. 4 shows an example of K ports CSI-RS transmission and an accompanying example frequency response.

FIGS. 5A and 5B show an example 4-taps channel analysis.

FIG. 6 shows an example precoder selection based on DFT reporting.

FIG. 7 shows an example format of the CSI report with additional DFT reporting.

FIG. 8 shows an example table of associations between PMI (precoding matrix indicator) indices and CSI information.

FIG. 9 shows an example format of the CSI report with additional DFT reporting according to one or more embodiments.

FIG. 10 shows an example format of the CSI report with additional DFT reporting according to one or more embodiments.

FIG. 11 shows an example table of associations between PMI indices and CSI information according to one or more embodiments.

FIG. 12 shows an example of an association between PMI indices and CSI Information according to one or more embodiments.

FIG. 13 shows example format of the CSI report with additional DFT reporting according to one or more embodiments.

FIG. 14 shows an example table of associations between PMI indices and CSI information according to one or more embodiments.

FIG. 15 shows an example format of the CSI report with additional DFT reporting according to one or more embodiments.

DETAILED DESCRIPTION

Embodiments of the present invention will be described in detail below with reference to the drawings. Like elements in the various figures are denoted by like reference numerals for consistency.

In the following description of embodiments of the invention, numerous specific details are set forth in order to provide a more thorough understanding of the invention. However, it will be apparent to one of ordinary skill in the art that the invention may be practiced without these specific details. In other instances, well-known features have not been described in detail to avoid obscuring the invention.

FIG. 1 describes a wireless communication system 1 according to one or more embodiments of the present invention. The wireless communication system 1 includes a user equipment (UE) 10, a base station (BS) 20, and a core network 30. The wireless communication system 1 may be an NR system. The wireless communication system 1 is not limited to the specific configurations described herein and may be any type of wireless communication system such as an LTE/LTE-Advanced (LTE-A) system.

The BS 20 may communicate uplink (UL) and downlink (DL) signals with the UE 10 in a cell of the BS 20. The DL and UL signals may include control information and user data. The BS 20 may communicate DL and UL signals with the core network 30 through backhaul links 31. The BS 20 may be gNodeB (gNB). The BS 20 may be referred to as a network (NW) 20.

The BS 20 includes antennas, a communication interface to communicate with an adjacent BS 20 (for example, X2 interface), a communication interface to communicate with the core network 30 (for example, S1 interface), and a CPU (Central Processing Unit) such as a processor or a circuit to process transmitted and received signals with the UE 10. Operations of the BS 20 may be implemented by the processor processing or executing data and programs stored in a memory. However, the BS 20 is not limited to the hardware configuration set forth above and may be realized by other appropriate hardware configurations as understood by those of ordinary skill in the art. Numerous BSs 20 may be disposed so as to cover a broader service area of the wireless communication system 1.

The UE 10 may communicate DL and UL signals that include control information and user data with the BS 20 using Multi Input Multi Output (MIMO) technology. The UE 10 may be a mobile station, a smartphone, a cellular phone, a tablet, a mobile router, or information processing apparatus having a radio communication function such as a wearable device. The wireless communication system 1 may include one or more UEs 10.

The UE 10 may include a CPU such as a processor, a RAM (Random Access Memory), a flash memory, and a radio communication device to transmit/receive radio signals to/from the BS 20 and the UE 10. For example, operations of the UE 10 described below may be implemented by the CPU processing or executing data and programs stored in a memory. However, the UE 10 is not limited to the hardware configuration set forth above and may be configured with, e.g., a circuit to achieve the processing described below.

As shown in FIG. 1, the BS 20 may transmit a CSI-Reference Signal (CSI-RS) to the UE 10. In response, the UE 10 may transmit a CSI report to the BS 20. Similarly, the UE 10 may transmit SRS to the BS 20.

(Configuration of BS)

The BS 20 according to embodiments of the present invention will be described below with reference to FIG. 2. FIG. 2 is a diagram illustrating a schematic configuration of the BS 20 according to embodiments of the present invention. The BS 20 may include a plurality of antennas (antenna element group) 201, amplifier 202, transceiver (transmitter/receiver) 203, a baseband signal processor 204, a call processor 205 and a transmission path interface 206.

User data that is transmitted on the DL from the BS 20 to the UE 20 is input from the core network, through the transmission path interface 206, into the baseband signal processor 204.

In the baseband signal processor 204, signals may be subjected to Packet Data Convergence Protocol (PDCP) layer processing, Radio Link Control (RLC) layer transmission processing such as division and coupling of user data and RLC retransmission control transmission processing, Medium Access Control (MAC) retransmission control, including, for example, HARQ transmission processing, scheduling, transport format selection, channel coding, inverse fast Fourier transform (IFFT) processing, and precoding processing. Then, the resultant signals are transferred to each transceiver 203. As for signals of the DL control channel, transmission processing is performed, including channel coding and inverse fast Fourier transform, and the resultant signals are transmitted to each transceiver 203.

The baseband signal processor 204 notifies each UE 10 of control information (system information) for communication in the cell by higher layer signaling (e.g., Radio Resource Control (RRC) signaling and broadcast channel). Information for communication in the cell includes, for example, UL or DL system bandwidth.

In each transceiver 203, baseband signals that are precoded per antenna and output from the baseband signal processor 204 are subjected to frequency conversion processing into a radio frequency band. The amplifier 202 amplifies the radio frequency signals having been subjected to frequency conversion, and the resultant signals are transmitted from the antennas 201.

As for data to be transmitted on the UL from the UE 10 to the BS 20, radio frequency signals are received in each antennas 201, amplified in the amplifier 202, subjected to frequency conversion and converted into baseband signals in the transceiver 203, and are input to the baseband signal processor 204.

The baseband signal processor 204 performs FFT processing, IDFT processing, error correction decoding, MAC retransmission control reception processing, and RLC layer and PDCP layer reception processing on the user data included in the received baseband signals. Then, the resultant signals are transferred to the core network through the transmission path interface 206. The call processor 205 performs call processing such as setting up and releasing a communication channel, manages the state of the BS 20, and manages the radio resources.

(Configuration of UE)

The UE 10 according to embodiments of the present invention will be described below with reference to FIG. 3. FIG. 3 is a schematic configuration of the UE 10 according to embodiments of the present invention. The UE 10 has one or more UE antennas 101, amplifiers 102, the circuit 103 comprising transceiver (transmitter/receiver) 1031, the controller 104, and an application 105.

As for DL, radio frequency signals received in the UE antenna 101 are amplified in the respective amplifiers 102, and subjected to frequency conversion into baseband signals in the transceiver 1031. These baseband signals are subjected to reception processing such as FFT processing, error correction decoding, retransmission control and so on, in the controller 104. The DL user data is transferred to the application 105. The application 105 performs processing related to higher layers above the physical layer and the MAC layer. In the downlink data, broadcast information is also transferred to the application 105.

On the other hand, UL user data is input from the application 105 to the controller 104. In the controller 104, retransmission control (Hybrid ARQ) transmission processing, channel coding, precoding, DFT processing, IFFT processing and so on are performed, and the resultant signals are transferred to each transceiver 1031. In the transceiver 1031, the baseband signals output from the controller 104 are converted into a radio frequency band. After that, the frequency-converted radio frequency signals are amplified in the amplifier 102, and then, transmitted from the antenna 101.

One or more embodiments of the present invention relate to port selection (PS) codebook enhancements utilizing DL/UL reciprocity of angle and/or delay. Further, one or more embodiments support codebook structure $\mathbf{W}=\mathbf{W}_1\mathbf{W}_2\,\mathbf{W}_f^H$ where:

$\mathbf{W}_1$ is a free selection matrix, with an identity matrix as a special configuration and under consideration is potential polarization-common/specific selection; and

$\mathbf{W}_f$ is a DFT based compression matrix in which N3 = $N_{CQISubband}$*R and $M_v$>=1.

In this regard, at least one value of $M_v$>1 is supported. Also under consideration is the potential value(s) of $M_v$, such as for example, $M_v$=2.

Consider that support of $M_v$>1 could be a UE optional feature if the UE supports Rel-17 PS codebook enhancement, which may take into account UE complexity related to codebook parameters. Also consider potential candidate value(s) of R, a mechanism for configuring/indicating to the UE and/or a mechanism for selecting/reporting by UE for $\mathbf{W}_f$.

$\mathbf{W}_f$ can be turned off by gNB. When turned off, $\mathbf{W}_f$ is an all-one vector; however, also consider the length of an all-one vector when turned off. Additionally, consider other potential signalling/CSI reporting mechanism that may trade-off signalling overhead, UE complexity, and UPT gain.

Further, the associated codebook configurations and CSI reporting can be different based on whether **Wr** is turned on/off.

With respect to Type II Port Selection Codebook Structure for 5G NR Rel. 17, the port selection codebook for *l*-th layer can be given as follows in equation (1):

$$\boldsymbol{W}_l(K\times \boldsymbol{N}_3)=\boldsymbol{W}_{1,l}\widetilde{\boldsymbol{W}}_l\mathbf{W}_{\mathrm{f},l}^{\mathrm{H}}$$

In the above equation (1), the parameters may be given as follows:

$\mathbf{W}_1$ **($K \times 2L$):** Block diagonal matrix where each matrix block consists of $L$ columns of an ($K \times K$) identity matrix;
$\mathbf{W}_{f,l}$ **($N_3 \times M_v$):** A matrix consisting of $M_v$ basis vectors from a ($N_3 \times N_3$) DFT matrix; and
$\tilde{\boldsymbol{W}}_l$ **($2L \times M_v$):** Linear combination coefficient matrix.

The gNB can turn off $\mathbf{W}_{f,l}$.

Further, the gNB transmits *K* beamformed CSI-RS ports. Each CSI-RS port is beamformed with a spatial domain (SD) beam and a frequency domain (FD) basis vector. That is, each port is associated with a SD-FD pair. Subsequently, the UE selects *L* ports out of *K* and reports them to the gNB as part of PMI **($\boldsymbol{W}_{1,l}$).** Further, the UE reports linear combination (LC) coefficients captured within $\tilde{\boldsymbol{W}}_l$ as part of PMI, as well.

Turning now to capture the physical meaning of the CSI-RS beamforming considering a SD-FD pair, frequency response characterization are discussed. For example, with reference to FIG. 4, assume *K* ports for CSI-RS transmission. Then, the frequency response of the observed channel at the UE associated with *n*-th port can be represented as shown in FIG. 4. If $\mathbf{W}_{f,l}$ is not turned off, the UE can report additional DFTs to further suppress the frequency selectivity of the delay pre-compensated channel.

Turning to simulation analysis, channel frequency response is analyzed with additional delays. For example, with reference to FIGS. 5A and 5B, a 4-taps channel is considered. In this example, the UE reports one additional DFT based on the observed delay pre-compensated channel. Frequency selectivity of the delay pre-compensated channel can be further reduced by considering additional DFT(s) reported by the UE for final precoder generation.

One or more embodiments relating to Type II port selection codebook structure for 5G NR Rel. 17 depend on whether the UE is configured to report additional DFTs. Hence, based on the presence of $\mathbf{W}_{f,l}$ in equation (1) one of the two precoders shown in FIG. 6 will be selected. That is, FIG. 6 shows a decision diagram for precoders as to whether additional DFT reporting is configured. It may be assumed that the considered SD-FD pairs for beamforming are, $\{\boldsymbol{b}_1, \boldsymbol{f}_1\}, \{\boldsymbol{b}_2, \boldsymbol{f}_2\}, \cdots \{\boldsymbol{b}_K, \boldsymbol{f}_K\}$ and indices of selected SD and FD bases are, $s(1), s(2) \cdots s(L)$.

In the equations shown in FIG. 6, the following may be defined:

$\overline{\boldsymbol{b}}_{s(i)}$: is a column vector from a $(K \times K)$ identity matrix. In particular, this vector selects SD-FD bases with index, $s(i)$;
$\tilde{\boldsymbol{f}}_{s(j)}$: is a column vector from a $(N_3 \times N_3)$ DFT matrix and $s(j)$ represents index of the selected additional $j$-th DFT basis; and
$c_{i,j}$, $c_i$: are LC coefficients.

Also note that the CSI reporting overhead associated with additional DFT reporting can be higher compared to that of not reporting additional DFTs. Further, note that the precoder selection is based on the perspective of the UE.

Those skilled in the art will appreciate that additional DFT reporting may associate with potential advantages or disadvantages. When additional DFT reporting is configured, frequency selectivity of the observed channel at the UE can be further suppressed. Hence, better performance can be expected. On the other hand, CSI reporting overhead can be higher compared to not reporting additional DFTs. With respect to when additional DFT reporting is not configured, CSI reporting overhead can be smaller compared to reporting additional DFTs. On the other hand, performance may be degraded due to the lack of knowledge of the channel observed by the UE in the DL.

As discussed in further detail below, consider the format of the CSI report for an enhanced Type II Codebook [Non-Patent Reference 3] (hereinafter, will be referred to as "[3]"). In particular, as per [3], enhanced Type II CSI feedback on PUSCH comprises of two parts. Part 1 has a fixed payload size and is used to identify the number of information bits in Part 2. Section 5.2.3 of [3] describes that:

"[f]or Enhanced Type II CSI feedback, Part 1 contains RI (rank indicator), CQI (channel quality information), and an indication of the overall number of non-zero amplitude coefficients across layers for the Enhanced Type II CSI (see Clause 5.2.2.2.5). The fields of Part 1 - RI, CQI, and the indication of the overall number of non-zero amplitude coefficients across layers - are separately encoded. Part 2 contains the PMI of the Enhanced Type II CSI. Part 1 and 2 are separately encoded." FIG. 7 shows an example format for the CSI reporting.

Turning to FIG. 8, PMI indices may be associated with respective CSI information for enhanced Type II Codebook [3]. In particular, for DFT bases reporting, PMI indices $i_{1,5}$ and $i_{1,6,1}$ may be used. For example, as seen in FIG. 8, when $N_3 >$ 19, DFT bases are selected from a DFT window. The size of the selected DFT window may be pre-defined. However, the initial starting position of the DFT window is reported by the UE, i.e., PMI index $i_{1,5}$.

Note here that, a bitmap is a matrix whose nonzero bits identify which coefficients within $\tilde{\mathbf{W}}_l$ in (1) are reported by the UE for $l$-th layer. This is also reported as part of PMI.

As discussed further below, consider possible CSI report formats for Rel. 17 Type II Port Selection codebook specifically considering whether the additional DFT reporting is configured or not.

### First Example Embodiment

As discussed above, studies are under way with regard to Type II port selection codebook structure. In one or more embodiments described herein, when additional DFT reporting is configured for a Rel. 17 Type II port selection codebook, two cases can be considered for determining the format of a CSI report based on whether a bitmap is reported or not.

As a first option for consideration, the CSI report when the bitmap is reported can be captured as shown in FIG. 9. It is noted that, similar to the enhanced Type II codebook discussed above, PMI indices can be associated with the information in CSI part 2.

As a second option for consideration, the CSI report for when the bitmap is not reported can be captured as shown in FIG. 10. It is noted that compared to the first option, i.e., that the bit map is reported, here, CSI part 1 does not need to capture a number of non-zero amplitude coefficients. This is because, in this scenario the UE should report all the LC coefficients. Additionally, CSI part 2 does not include bitmaps. The reason here again is that the UE should report all of the LC coefficients.

As a third option for consideration, the NW can decide whether bitmap reporting is needed or not based on $M_v$ (*i.e.,* number of additional DFTs to be reported). In this case, the NW can switch UE behavior between the first option and the second option based on whether bitmap reporting is required or not.

For example, if $M_v$ is large, then reporting all of the LC coefficients may occupy large overhead. In that case, the NW can configure the UE to report a bitmap to select and report only the most significant LC coefficients as in the first option.

On the other hand, if $M_v$ is smaller the NW can then configure the UE to report all of the LC coefficients. Hence, in this scenario bitmap reporting is not needed as in the second option.

Additionally or alternatively, there may be a pre-defined rule captured in the specification(s) to determine whether UE should or should not report a bitmap. For example, the specification(s) may define the following rule: "If $M_v < 2$, do not report bitmap; else report bitmap." Note that value of 2 is just an example and those skilled in the art will appreciate that other values are not precluded.

With respect to the first option, if the higher-layer configures the Rel. 17 Type II PS codebook, the following behavior should be considered when bitmap reporting is done. For Enhanced Type II CSI feedback, Part 1 contains RI, CQI, and an indication of the overall number of non-zero amplitude coefficients across layers for the Enhanced Type II CSI (see Clause 5.2.2.2.5 of [3]). The fields of Part 1 - RI, CQI, and the indication of the overall number of non-zero amplitude coefficients across layers - are separately encoded. Part 2 then contains the PMI of the Enhanced Type II CSI. Parts 1 and 2 are separately encoded. This behavior may be applicable to the first option when the bitmap is always reported or to the third option if the NW configures bitmap reporting.

With respect to the second option, if the higher-layer configures the Rel. 17 Type II PS codebook, the following behavior should be considered when no bitmap reporting is done. For Enhanced Type II port selection codebook CSI feedback, Part 1 contains RI, and CQI, for the Enhanced Type II CSI (see Clause 5.2.2.2.5 of [3]). The fields of Part 1 - RI, CQI, are separately encoded. Part 2 contains the PMI of the Enhanced Type II CSI. Part 1 and 2 are separately encoded. This behavior may be applicable to the second option when the bitmap is not reported or to the third option if the NW configures to not report the bitmap.

**Second Example Embodiment**

As discussed above, studies are under way with regard to Type II port selection codebook structure. In one or more embodiments described herein, an association may be formed between PMI indices and CSI information with additional DFT reporting. That is, with no bitmap reporting, PMI indices can be associated with different CSI part 2 information as shown in FIG. 11. Note that compared to the First Example Embodiment the PMI index associated with bitmap reporting, *i.e.,* $i_{1,7,l}$, has been removed. As yet another option, the $i_{1,7,l}$ PMI index associated with bitmap reporting may still be included. However, it occupies zero bits within the UCI. Note that both the UE and the NW are aware of this scenario.

FIG. 12 shows an example of PMI with bitmap reporting and PMI without bitmap reporting.

**Third Example Embodiment**

As discussed above, studies are under way with regard to Type II port selection codebook structure. In one or more embodiments described herein, grouping of CSI part 2 information with additional DFT reporting may be performed.

With bitmap reporting, the grouping of CSI part 2 information discussed in Section 5.2.3 in [3] can be updated as follows:

- Group 0 includes indices $i_{1,1}$, $i_{1,2}$ and $i_{1,8,l}$ ($l = 1, \ldots, \upsilon$).
- Group 1 includes indices $i_{1,5}$ (if reported), $i_{1,6,l}$ (if reported), the $\upsilon 2LM_\upsilon - \lfloor K^{NZ}/2 \rfloor$ highest priority elements of $i_{1,7,l}$, $i_{2,3,l}$, the $\lceil K^{NZ}/2 \rceil - \upsilon$ highest priority elements of $i_{2,4,l}$ and the $\lceil K^{NZ}/2 \rceil - \upsilon$ highest priority elements of $i_{2,5,l}$ ($l = 1, \ldots, \upsilon$).
- Group 2 includes the $\lfloor K^{NZ}/2 \rfloor$ lowest priority elements of $i_{1,7,l}$, the $\lfloor K^{NZ}/2 \rfloor$ lowest priority elements of $i_{2,4,l}$ and the $\lfloor K^{NZ}/2 \rfloor$ lowest priority elements of $i_{2,5,l}$ ($l = 1, \ldots, \upsilon$).

This behavior for bitmap reporting may be applicable to, for example, the First Example Embodiment in the first option where the bitmap is always reported or the third option if the NW configures bitmap reporting.

With no bitmap reporting, the grouping of CSI part 2 information discussed in Section 5.2.3 of [3] can be updated as follows:

- Group 0 includes indices $i_{1,1}$, $i_{1,2}$ and $i_{1,8,l}$ ($l$ = 1, ... , $\upsilon$).
- Group 1 includes indices $i_{1,5}$ (if reported), $i_{1,6,l}$ (if reported), the $\upsilon 2LM_{\upsilon}$ - $\lfloor K^{NZ}/2 \rfloor$ highest priority elements of $i_{2,3,l}$, the $\lceil K^{NZ}/2 \rceil - \upsilon$ highest priority elements of $i_{2,4,l}$ and the $\lceil K^{NZ}/2 \rceil - \upsilon$ highest priority elements of $i_{2,5,l}$ ($l$ = 1, ... ,$\upsilon$).
- Group 2 includes the $\lfloor K^{NZ}/2 \rfloor$ lowest priority elements of $i_{2,4,l}$ and the $\lfloor K^{NZ}/2 \rfloor$ lowest priority elements of $i_{2,5,l}$ ($l$ = 1, ... , $\upsilon$).

Note here that the PMI index associated with bitmap reporting, *i.e.,* $i_{1,7,l}$, has been removed. Further note that the behavior in this scenario may be applicable to, for example, the First Example Embodiment in the second option where the bitmap is not reported or the third option if the NW configures there to be no bitmap reporting.

Additionally or alternatively, the $i_{1,7,l}$ PMI index may still be present. However, it occupies zero bits within the UCI. Note that both the UE and the NW are aware of this scenario.

**Fourth Example Embodiment**

As discussed above, studies are under way with regard to Type II port selection codebook structure. In one or more embodiments described herein, consider the format of the CSI report without additional DFT reporting. That is, when additional DFT reporting is not configured for Rel. 17 Type II port selection codebook, two cases can again be considered for determining the format of a CSI report. However, the different cases are based on whether the CSI reporting is wideband or sub-band.

As a first option, a possible format for consideration of the CSI report with wideband CSI reporting can be given as shown in FIG. 13. Note that compared to a scenario with additional DFT reporting, now CSI part 2 does not need to capture information associated with DFT bases reporting. Further, there is no bitmap reporting as well. As discussed above in relation to the First Example Embodiment, in the second option, section 5.2.3 of [3] could be updated in a substantially similar fashion.

In one or more embodiments, an association may be formed between PMI indices and CSI Information without additional DFT reporting. FIG. 14 captures an example scenario with wideband CSI reporting where PMI indices can be associated with different CSI part 2 information as shown in the table. Note that compared to the additional DFT reporting case, the $i_{1,7,l}$, $i_{1,6,l}$, $i_{1,5}$ PMI indices (*i.e.,* bitmap and DFT reporting) have been removed in this association.

As a second option, a possible format for the CSI report with sub-band CSI reporting can be given as shown in FIG. 15. In this scenario, it is noted that, compared to wideband reporting, the associated overhead with sub-band based CSI reporting may be much larger. Further note that for CSI part 2, amplitude/phase quantization will be same as Rel. 16. However, there will be no additional DFT and bitmap reporting. Also similar to wideband reporting, PMI indices can be associated with CSI part 2 information, such as, for example, shown in FIG. 13. Additionally or alternatively, it is also possible to consider Rel. 15 behavior for determining the CSI report format of sub-band based CSI reporting. Note here that in Rel. 15, wideband amplitude reporting is done. Additionally, sub-band reporting is based on 1-bit amplitude quantization in such a scenario.

**Variations**

The information, signals, and/or others described in this specification may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output from higher layers to lower layers and/or from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/present embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs), and so on), MAC (Medium Access Control) signaling and so on), and other signals and/or combinations of these.

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using wired technologies (coaxial cables, optical fiber cables, twisted-pair cables, digital subscriber lines (DSL), and so on) and/or wireless technologies (infrared radiation, microwaves, and so on), these wired technologies and/or wireless technologies are also included in the definition of communication media.

The terms "system" and "network" as used in this specification are used interchangeably.

In the present specification, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or a plurality of (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of a base station and/or a base station subsystem that provides communication services within this coverage.

In the present specification, the terms "mobile station (MS)," "user terminal," "user equipment (UE)," and "terminal" may be used interchangeably.

A mobile station may be referred to as, by a person skilled in the art, a "subscriber station, " "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

Furthermore, the radio base stations in this specification may be interpreted as user terminals. For example, each aspect/present embodiment of the present disclosure may be applied to a configuration in which communication between a radio base station and a user terminal is replaced with communication among a plurality of user terminals (D2D (Device-to-Device)). In this case, the user terminals 20 may have the functions of the radio base stations 10 described above. In addition, wording such as "uplink" and "downlink" may be interpreted as "side." For example, an uplink channel may be interpreted as a side channel.

Likewise, the user terminals in this specification may be interpreted as radio base stations. In this case, the radio base stations may have the functions of the user terminals described above.

Actions which have been described in this specification to be performed by a base station may, in some cases, be performed by upper nodes. In a network including one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

One or more embodiments illustrated in this specification may be used individually or in combinations, which may be switched depending on the mode of implementation. The order of processes, sequences, flowcharts, and so on that have been used to describe the aspects/present embodiments herein may be re-ordered as long as inconsistencies do not arise. For example, although various methods have been illustrated in this specification with various components of steps in exemplary orders, the specific orders that are illustrated herein are by no means limiting.

One or more embodiments illustrated in the present disclosure may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and/or next-generation systems that are enhanced based on these.

The phrase "based on" (or "on the basis of') as used in this specification does not mean "based only on" (or "only on the basis of'), unless otherwise specified. In other words, the phrase "based on" (or "on the basis of") means both "based only on" and "based at least on" ("only on the basis of" and "at least on the basis of").

Reference to elements with designations such as "first," "second" and so on as used herein does not generally limit the quantity or order of these elements. These designations may be used herein only for convenience, as a method for distinguishing between two or more elements. Thus, reference to the first and second elements does not imply that only two elements may be employed, or that the first element must precede the second element in some way.

The term "judging (determining)" as used herein may encompass a wide variety of actions. For example, "judging (determining)" may be interpreted to mean making "judgments (determinations)" about calculating, computing, processing, deriving, investigating, looking up (for example, searching a table, a database, or some other data structures), ascertaining, and so on. Furthermore, "judging (determining)" may be interpreted to mean making "judgments (determinations)" about receiving (for example, receiving information), transmitting (for example, transmitting information), input, output, accessing (for example, accessing data in a memory), and so on. In addition, "judging (determining)" as used herein may be interpreted to mean making "judgments (determinations)" about resolving, selecting, choosing, assuming, establishing, comparing, and so on. In other words, "judging (determining)" may be interpreted to mean making "judgments (determinations)" about some action.

The terms "connected" and "coupled," or any variation of these terms as used herein mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In this specification, when two elements are connected, the two elements may be considered "connected" or "coupled" to each other by using one or more electrical wires, cables and/or printed electrical connections, and, as some non-limiting and non-inclusive examples, by using electromagnetic energy having wavelengths in radio frequency regions, microwave regions, (both visible and invisible) optical regions, or the like.

In this specification, the phrase "A and B are different" may mean that "A and B are different from each other." The terms "separate," "be coupled" and so on may be interpreted similarly.

Furthermore, the term "or" as used in this specification or in claims is intended to be not an exclusive disjunction.

Now, although the present invention has been described in detail above, it should be obvious to a person skilled in the art that the present invention is by no means limited to the embodiments described in this specification. The present invention can be implemented with various corrections and in various modifications, without departing from the spirit and scope of the invention defined by the recitations of claims. Consequently, the description in this specification is provided only for the purpose of explaining examples, and should by no means be construed to limit the invention according to the present invention in any way.

## Alternative Examples

The above examples and modified examples may be combined with each other, and various features of these examples may be combined with each other in various combinations. The invention is not limited to the specific combinations disclosed herein.

Although the disclosure has been described with respect to only a limited number of embodiments, those skilled in the art, having benefit of this disclosure, will appreciate that various other embodiments may be devised without departing from the scope of the present invention. Accordingly, the scope of the invention should be limited only by the attached claims.

Further embodiments are as follows:

E1. A wireless communication method for a User Equipment (UE) comprising:
receiving, via downlink control information (DCI) or higher layer signaling, configuration information; and
configuring a format for a Channel State Information (CSI) report based on the configuration information and based on whether a bitmap is being reported from the UE to a base station, wherein the CSI report includes part 1 and part 2, and
the part 1 has a fixed payload size and is used to identify a number of information bits in the part 2.

E2. The wireless communication method according to E1, wherein when the bitmap is being reported, the part 1 includes a rank indicator (RI), channel quality information (CQI), and an indication of an overall number of non-zero amplitude coefficients across layers.

E3. The wireless communication method according to E2, wherein the RI, CQI, and indication of the overall number of non-zero amplitude coefficients across layers are encoded separately.

E4. The wireless communication method according to E1, wherein when the bitmap is being reported, the part 2 includes the bitmap.

E5. The wireless communication method according to E1, wherein when the bitmap is not being reported, the part 1 includes a rank indicator (RI) and channel quality information (CQI), but does not include an indication of an overall number of non-zero amplitude coefficients across layers.

E6. The wireless communication method according to E5, wherein the RI and CQI are encoded separately.

(continued)

E7. The wireless communication method according to E1, wherein the part 2 includes a precoding matrix indicator (PMI).

E8. The wireless communication method according to E1, wherein when the bitmap is being reported, the part 2 includes the bitmap.

E9. The wireless communication method according to E1, wherein the UE determines whether to report the bitmap based on an instruction from the base station.

E10. The wireless communication method according to E1, wherein the part 1 and the part 2 are encoded separately.

E11. The wireless communication method according to E1, wherein when the bitmap is not being reported, indices of a precoding matrix indicator (PMI) are associated with different CSI information corresponding to the part 2.

E12. The wireless communication method according to E1, wherein information in the part 2 is grouped into groups each associated with a different index.

E13. A User Equipment (UE) comprising:

a receiver that receives, via downlink control information (DCI) or higher layer signaling, configuration information; and

a processor that configures a format for a Channel State Information (CSI) report based on the configuration information and based on whether a bitmap is being reported from the UE to a base station,

wherein the CSI report includes part 1 and part 2, and

the part 1 has a fixed payload size and is used to identify the number of information bits in the part 2.

E14. A base station comprising:

a transmitter that transmits to a User Equipment (UE), via downlink control information (DCI) or higher layer signaling, configuration information; and a processor that controls to receive a Channel State Information (CSI) report having a format that is configured based on the configuration information and based on whether a bitmap is being reported from the UE to the base station,

wherein the CSI report includes part 1 and part 2, and

the part 1 has a fixed payload size and is used to identify the number of information bits in the part 2.

## Claims

**1.** A terminal (10) comprising:

a processor (104) configured to control a channel state information, CSI, report including a precoding matrix indicator, PMI, based on a pre-defined rule indicating whether or not the report includes a bitmap;
a transmitter (1031) configured to, when the bitmap is included, report, as part of the PMI, the bitmap, wherein the bitmap identifies which coefficients within a matrix related to a Type II port selection codebook structure of the CSI are reported.

**2.** A wireless communication method for a terminal (10), the method comprising:

controlling a channel state information, CSI, report including a precoding matrix indicator, PMI, based on a pre-defined rule indicating whether or not the report includes a bitmap;
reporting, when the bitmap is included, as part of the PMI, the bitmap, wherein the bitmap identifies which coefficients within a matrix related to a Type II port selection codebook structure of the CSI are reported.

**3.** A base station (20) comprising:

a receiver (203) configured to receive a channel state information, CSI, report including a precoding matrix indicator, PMI, based on a pre-defined rule indicating whether or not the report includes a bitmap;
a processor configured to identify, when the bitmap is included, which coefficients within a matrix related to a Type II port selection codebook structure of the CSI are reported based on the bitmap reported, as part of the PMI.

**4.** A system (1) comprising a terminal (10) according to claim 1 and a base station (20) according to claim 3.

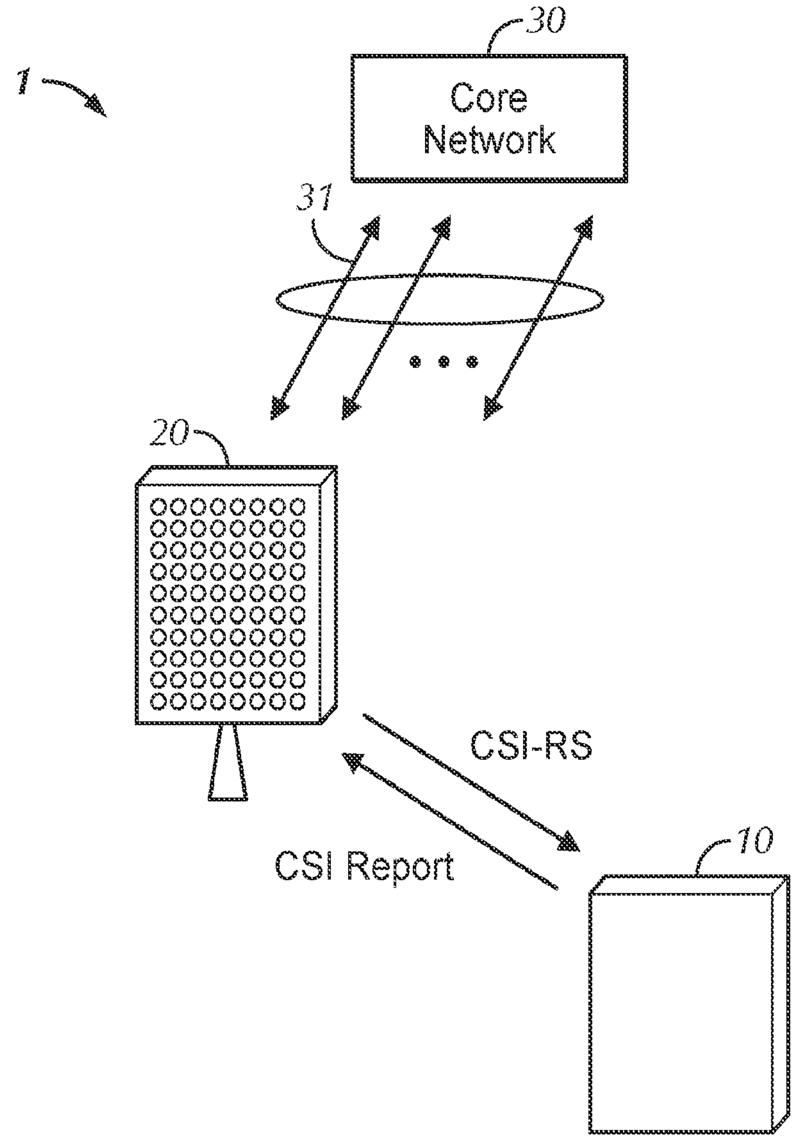


FIG. 1

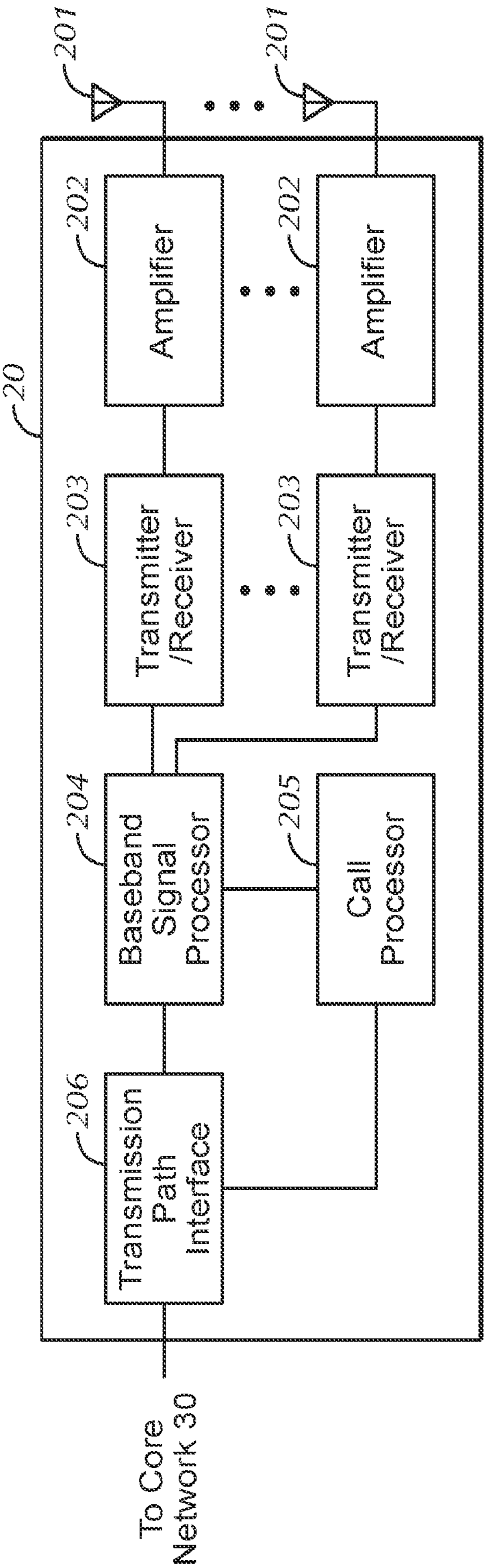
201
201
20
202
Amplifier
202
Amplifier
203
Transmitter
/Receiver
203
Transmitter
/Receiver
204
Baseband
Signal
Processor
205
Call
Processor
206
Transmission
Path
Interface
To Core
Network 30

FIG. 2

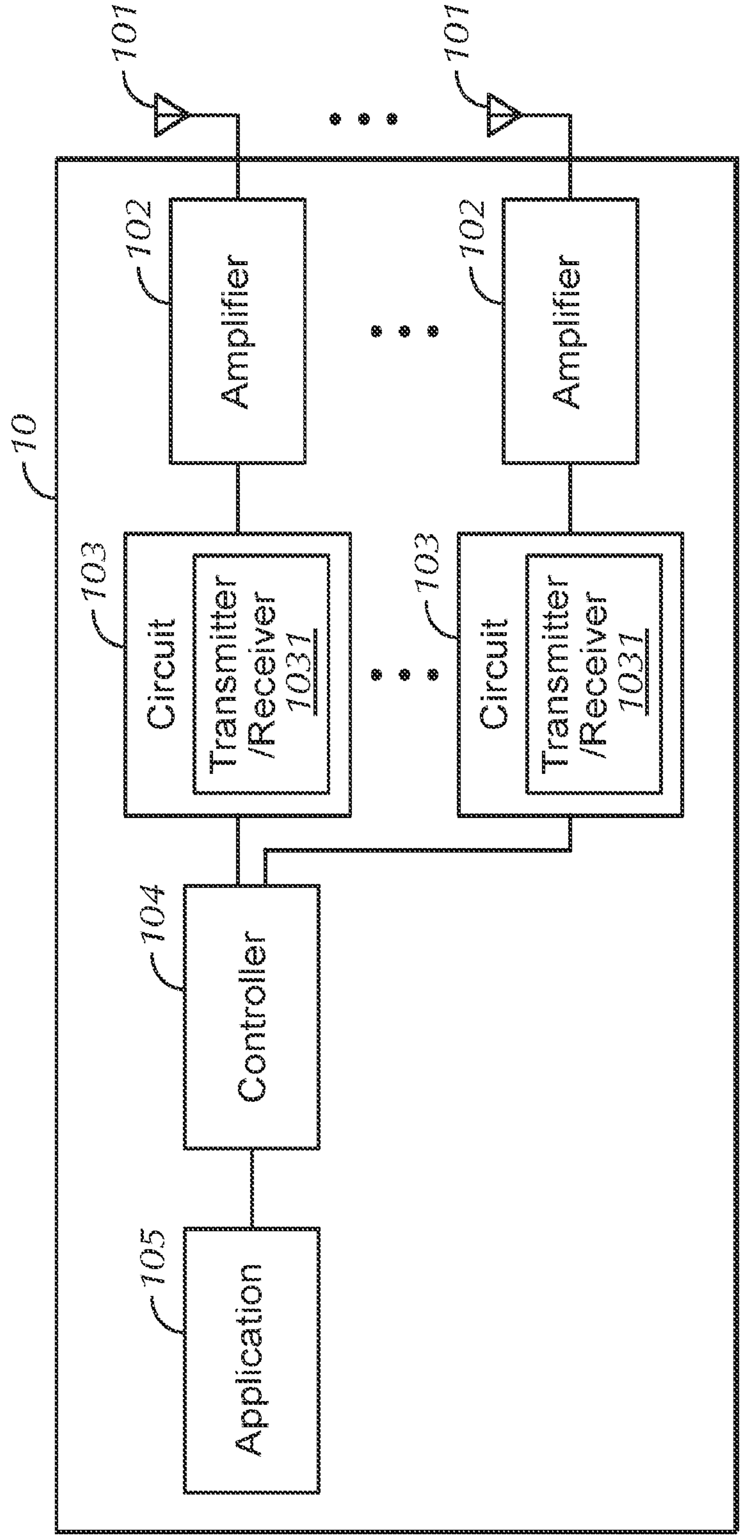
101
101
10
102
Amplifier
102
Amplifier
103
Circuit
Transmitter
/Receiver
1031
103
Circuit
Transmitter
/Receiver
1031
104
Controller
105
Application

FIG. 3

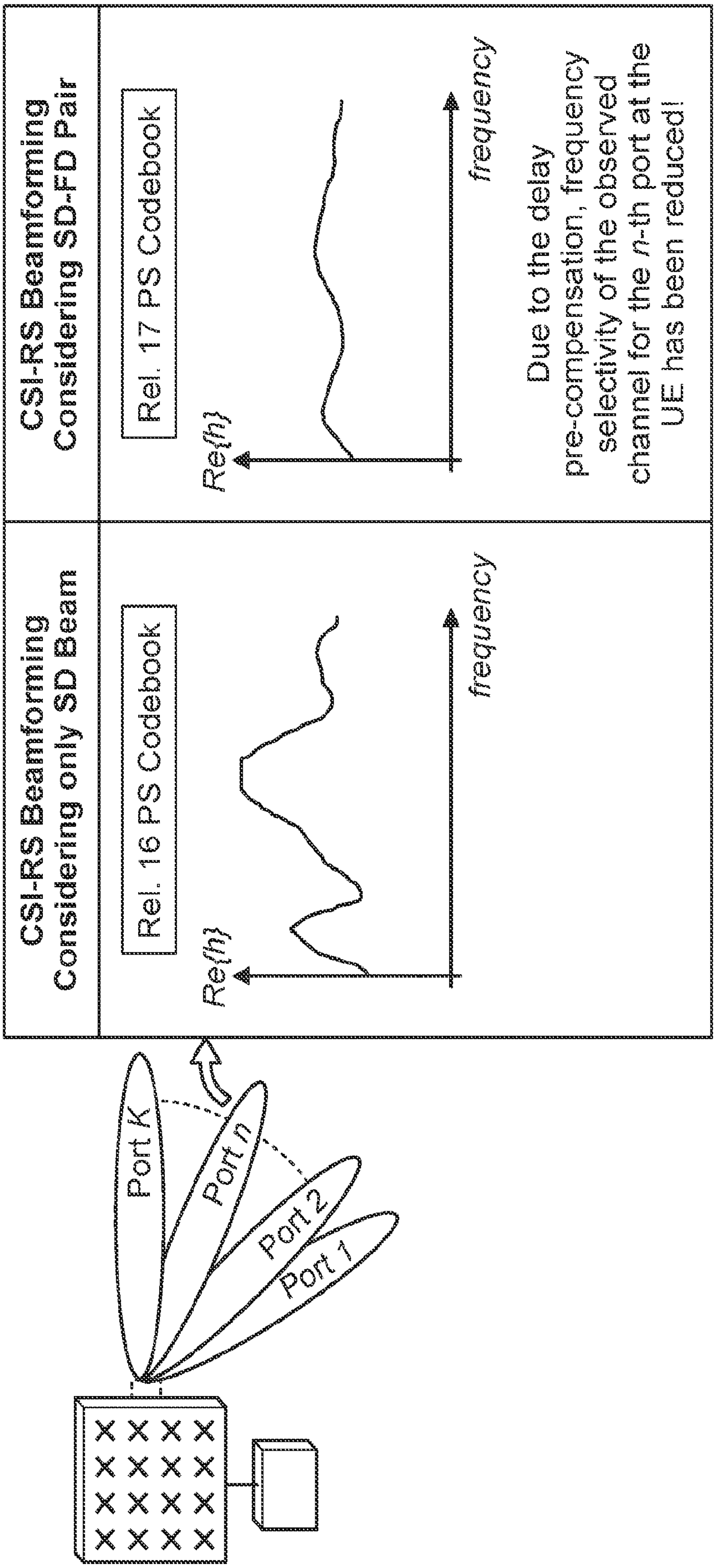
CSI-RS Beamforming Considering only SD Beam
Rel. 16 PS Codebook
Re{h}
frequency
CSI-RS Beamforming Considering SD-FD Pair
Rel. 17 PS Codebook
Re{h}
frequency
Due to the delay pre-compensation, frequency selectivity of the observed channel for the n-th port at the UE has been reduced!
Port K
Port n
Port 2
Port 1

*FIG. 4*

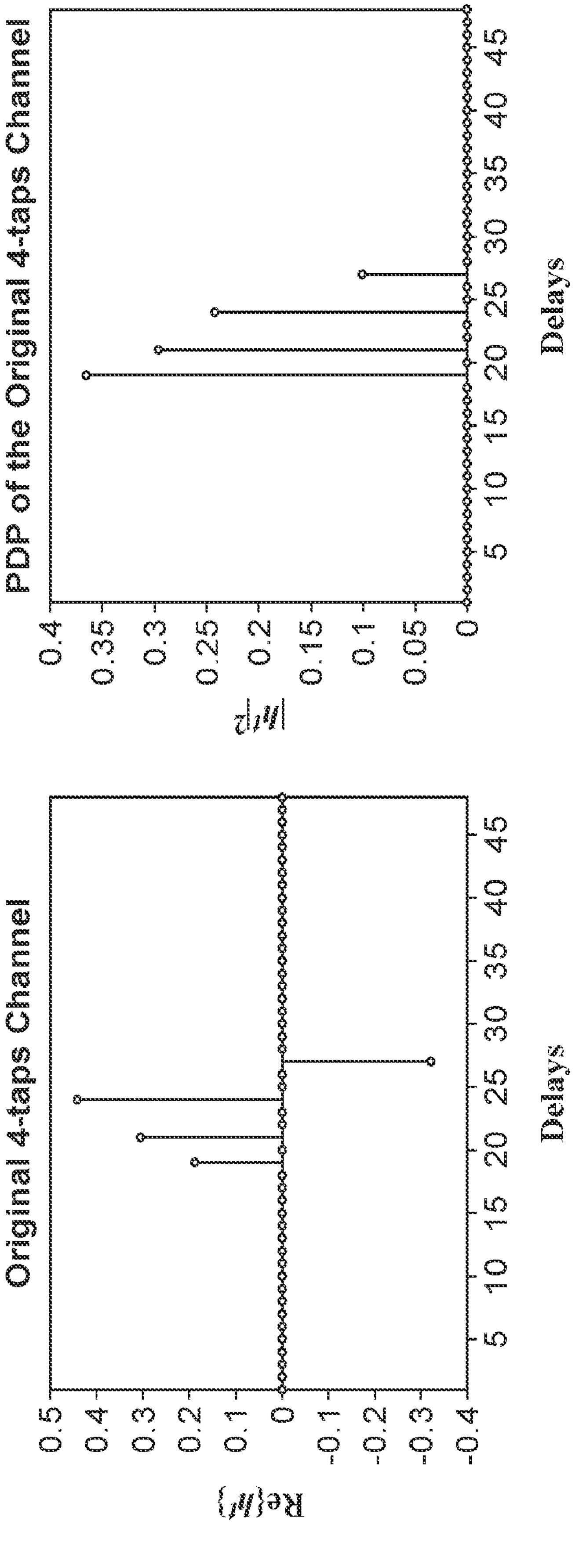
Original 4-taps Channel
Delays
PDP of the Original 4-taps Channel
Delays

FIG. 5A

UE reports 1 additional DFT based on the observed delay pre-compensated channel.

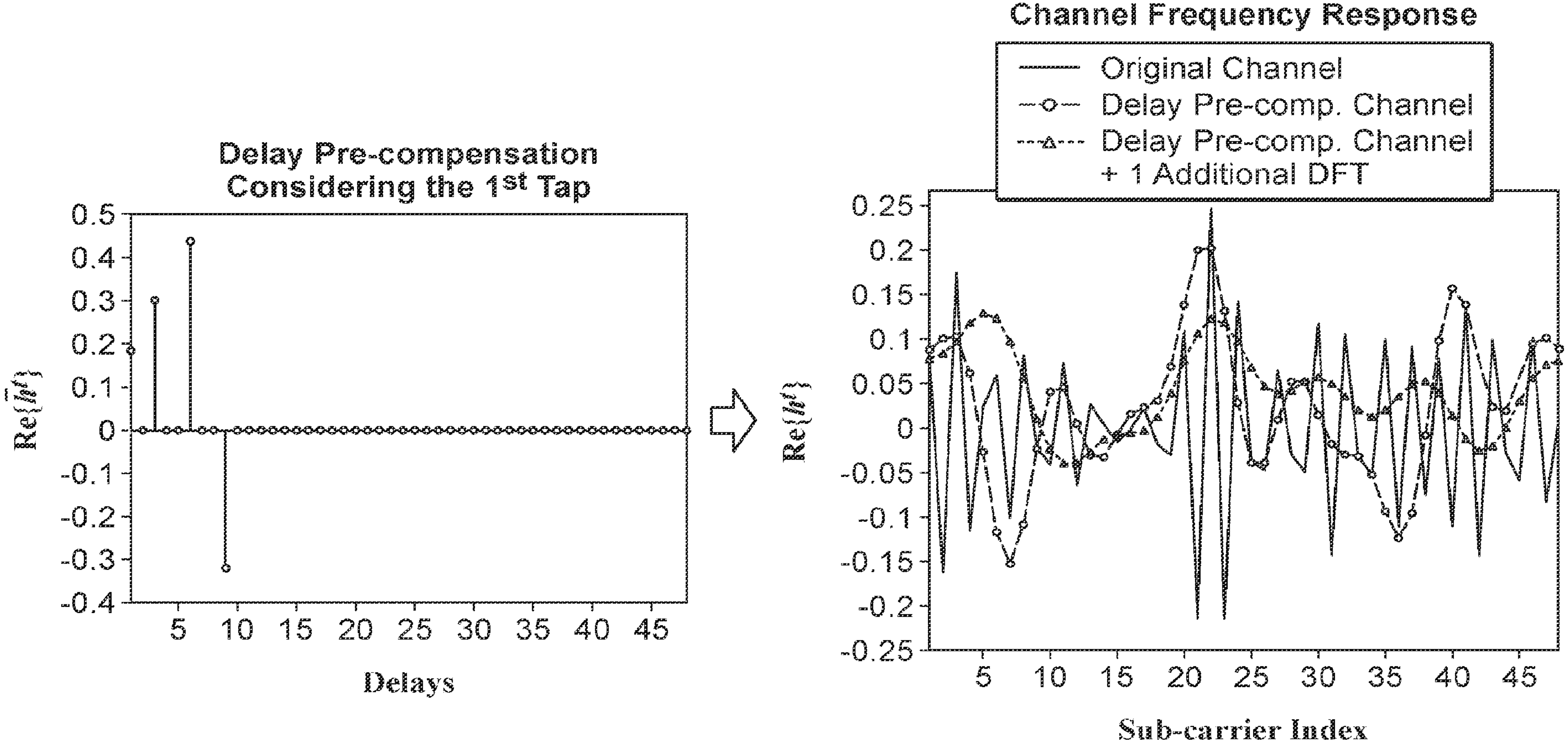


Frequency selectivity of the delay pre-compensated channel can be further reduced by considering additional DFT(s) reported by the UE for final precoder generation.

*FIG. 5B*

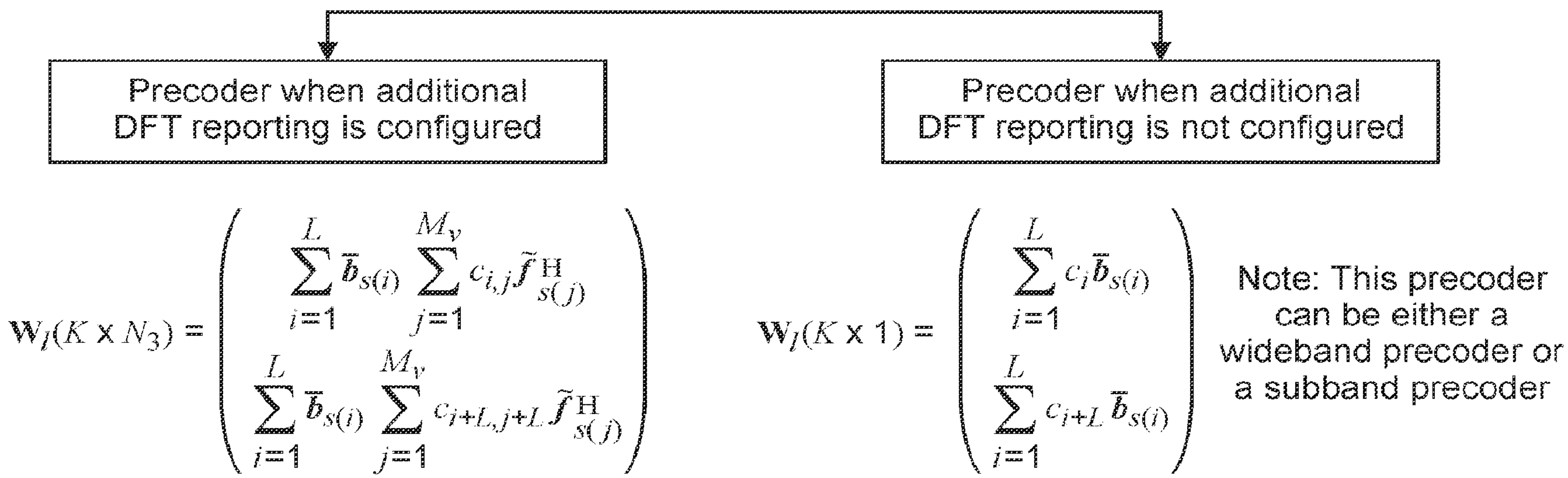
Precoder when additional DFT reporting is configured
Precoder when additional DFT reporting is not configured
$$\mathbf{W}_l(K \times N_3) = \begin{pmatrix} \sum_{i=1}^{L} \bar{\boldsymbol{b}}_{s(i)} \sum_{j=1}^{M_v} c_{i,j} \tilde{\boldsymbol{f}}^{\mathrm{H}}_{s(j)} \\ \sum_{i=1}^{L} \bar{\boldsymbol{b}}_{s(i)} \sum_{j=1}^{M_v} c_{i+L,j+L} \tilde{\boldsymbol{f}}^{\mathrm{H}}_{s(j)} \end{pmatrix}$$
$$\mathbf{W}_l(K \times 1) = \begin{pmatrix} \sum_{i=1}^{L} c_i \bar{\boldsymbol{b}}_{s(i)} \\ \sum_{i=1}^{L} c_{i+L} \bar{\boldsymbol{b}}_{s(i)} \end{pmatrix}$$
Note: This precoder can be either a wideband precoder or a subband precoder

*FIG. 6*

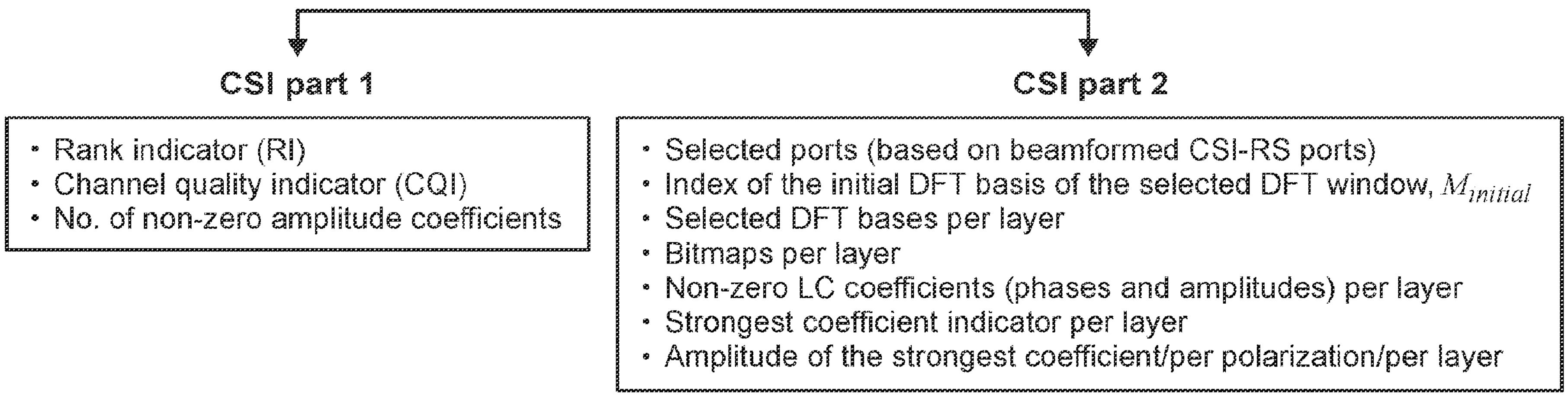
CSI part 1
• Rank indicator (RI)
• Channel quality indicator (CQI)
• No. of non-zero amplitude coefficients
CSI part 2
• Selected ports (based on beamformed CSI-RS ports)
• Index of the initial DFT basis of the selected DFT window, $M_{initial}$
• Selected DFT bases per layer
• Bitmaps per layer
• Non-zero LC coefficients (phases and amplitudes) per layer
• Strongest coefficient indicator per layer
• Amplitude of the strongest coefficient/per polarization/per layer

*FIG. 7*

Example: Size of the selected DFT window (pre-defined)

$f_0$ $f_1$ $f_2$ [$f_3$ $f_4$ $f_5$ $f_6$] $f_7$ $f_8$ ..... $f_{N_3-1}$

Starting position, $M_{initial}$

| PMI Index | Associated CSI Part 2 Information |
|---|---|
| $i_{1,1}$ | Selected ports |
| $i_{1,5}$ | Index of the initial DFT basis of the selected DFT window, $M_{initial}$ |
| $i_{1,6,l}$ | Selected DFT bases for $l$-th layer |
| $i_{1,7,l}$ | Bitmap for $l$-th layer |
| $i_{1,8,l}$ | Strongest coefficient indicator for $l$-th layer |
| $i_{2,3,l}$ | Amplitudes of the strongest coefficients (for both polarizations) $l$-th layer |
| $i_{2,4,l}$ | Amplitudes of the reporting coefficients of $l$-th layer |
| $i_{2,5,l}$ | Phases of the reporting coefficients of $l$-th layer |

PMI Indices for DFT Reporting

Note: $i_{1,5}$ is reported only when $N_3 > 19$!

*FIG. 8*

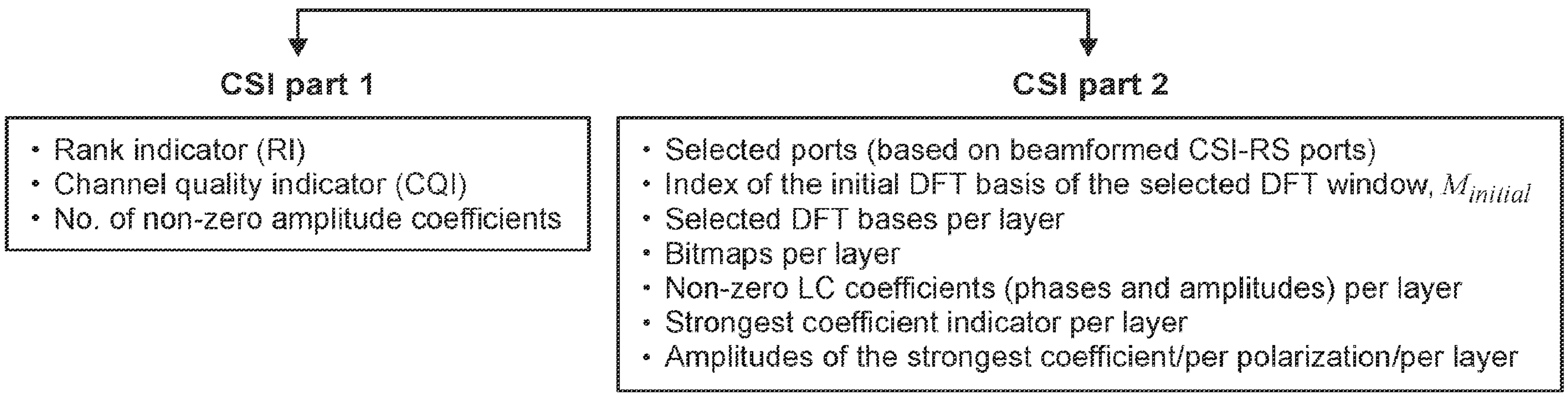
CSI part 1
CSI part 2
• Rank indicator (RI)
• Channel quality indicator (CQI)
• No. of non-zero amplitude coefficients
• Selected ports (based on beamformed CSI-RS ports)
• Index of the initial DFT basis of the selected DFT window, $M_{initial}$
• Selected DFT bases per layer
• Bitmaps per layer
• Non-zero LC coefficients (phases and amplitudes) per layer
• Strongest coefficient indicator per layer
• Amplitudes of the strongest coefficient/per polarization/per layer

*FIG. 9*

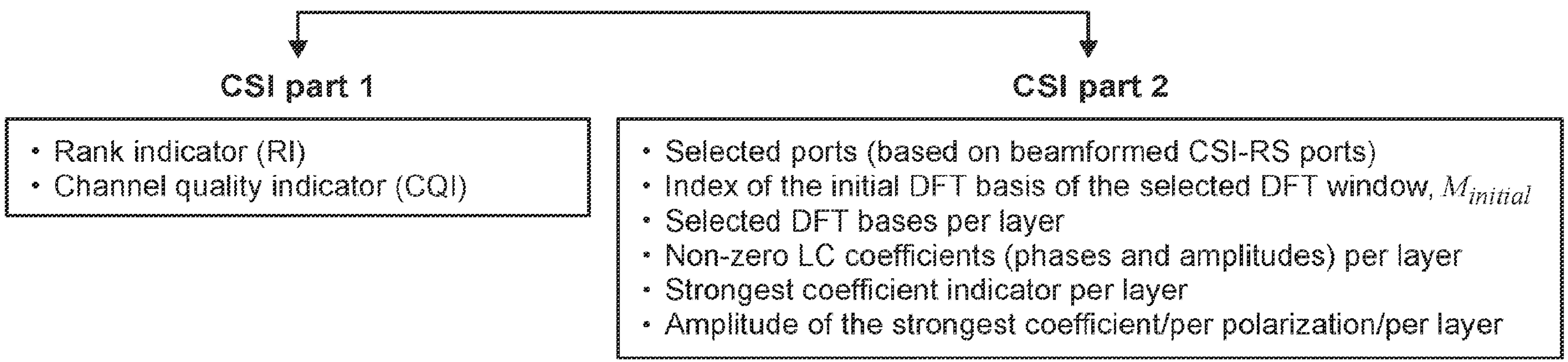
CSI part 1
CSI part 2
• Rank indicator (RI)
• Channel quality indicator (CQI)
• Selected ports (based on beamformed CSI-RS ports)
• Index of the initial DFT basis of the selected DFT window, $M_{initial}$
• Selected DFT bases per layer
• Non-zero LC coefficients (phases and amplitudes) per layer
• Strongest coefficient indicator per layer
• Amplitude of the strongest coefficient/per polarization/per layer

*FIG. 10*

| PMI Index [3] | Associated CSI Part 2 Information |
|---|---|
| $i_{1,1}$ | Selected ports |
| $i_{1,5}$ | Starting index of the selected DFT window, $M_{initial}$ |
| $i_{1,6,l}$ | Selected DFT bases for $l$-th layer |
| $i_{1,8,l}$ | Strongest coefficient indicator for $l$-th layer |
| $i_{2,3,l}$ | Amplitude of the strongest coefficient of $l$-th layer |
| $i_{2,4,l}$ | Amplitudes of the reporting coefficients of $l$-th layer |
| $i_{2,5,l}$ | Phases of the reporting coefficients of $l$-th layer |

*FIG. 11*

• PMI with bitmap reporting:

$$i_1 = \begin{cases} [i_{1,1} \ \ i_{1,5} \ \ i_{1,6,1} \ \ i_{1,7,1} \ \ i_{1,8,1}] & v = 1 \\ [i_{1,1} \ \ i_{1,5} \ \ i_{1,6,1} \ \ i_{1,7,1} \ \ i_{1,8,1} \ \ i_{1,6,2} \ \ i_{1,7,2} \ \ i_{1,8,2}] & v = 2 \\ [i_{1,1} \ \ i_{1,5} \ \ i_{1,6,1} \ \ i_{1,7,1} \ \ i_{1,8,1} \ \ i_{1,6,2} \ \ i_{1,7,2} \ \ i_{1,8,2} \ \ i_{1,6,3} \ \ i_{1,7,3} \ \ i_{1,8,3}] & v = 3 \\ [i_{1,1} \ \ i_{1,5} \ \ i_{1,6,1} \ \ i_{1,7,1} \ \ i_{1,8,1} \ \ i_{1,6,2} \ \ i_{1,7,2} \ \ i_{1,8,2} \ \ i_{1,6,3} \ \ i_{1,7,3} \ \ i_{1,8,3} \ \ i_{1,6,4} \ \ i_{1,7,4} \ \ i_{1,8,4}] & v = 4 \end{cases}$$

$$i_2 = \begin{cases} [i_{2,3,1} \ \ i_{2,4,1} \ \ i_{2,5,1}] & v = 1 \\ [i_{2,3,1} \ \ i_{2,4,1} \ \ i_{2,5,1} \ \ i_{2,3,2} \ \ i_{2,4,2} \ \ i_{2,5,2}] & v = 2 \\ [i_{2,3,1} \ \ i_{2,4,1} \ \ i_{2,5,1} \ \ i_{2,3,2} \ \ i_{2,4,2} \ \ i_{2,5,2} \ \ i_{2,3,3} \ \ i_{2,4,3} \ \ i_{2,5,3}] & v = 3 \\ [i_{2,3,1} \ \ i_{2,4,1} \ \ i_{2,5,1} \ \ i_{2,3,2} \ \ i_{2,4,2} \ \ i_{2,5,2} \ \ i_{2,3,3} \ \ i_{2,4,3} \ \ i_{2,5,3} \ \ i_{2,3,4} \ \ i_{2,4,4} \ \ i_{2,5,4}] & v = 4 \end{cases}$$

• PMI without bitmap reporting:

$$i_1 = \begin{cases} [i_{1,1} \ \ i_{1,5} \ \ i_{1,6,1} \ \ i_{1,8,1}] & v = 1 \\ [i_{1,1} \ \ i_{1,5} \ \ i_{1,6,1} \ \ i_{1,8,1} \ \ i_{1,6,2} \ \ i_{1,8,2}] & v = 2 \\ [i_{1,1} \ \ i_{1,5} \ \ i_{1,6,1} \ \ i_{1,8,1} \ \ i_{1,6,2} \ \ i_{1,8,2} \ \ i_{1,6,3} \ \ i_{1,8,3}] & v = 3 \\ [i_{1,1} \ \ i_{1,5} \ \ i_{1,6,1} \ \ i_{1,8,1} \ \ i_{1,6,2} \ \ i_{1,8,2} \ \ i_{1,6,3} \ \ i_{1,8,3} \ \ i_{1,6,4} \ \ i_{1,8,4}] & v = 4 \end{cases}$$

$$i_2 = \begin{cases} [i_{2,3,1} \ \ i_{2,4,1} \ \ i_{2,5,1}] & v = 1 \\ [i_{2,3,1} \ \ i_{2,4,1} \ \ i_{2,5,1} \ \ i_{2,3,2} \ \ i_{2,4,2} \ \ i_{2,5,2}] & v = 2 \\ [i_{2,3,1} \ \ i_{2,4,1} \ \ i_{2,5,1} \ \ i_{2,3,2} \ \ i_{2,4,2} \ \ i_{2,5,2} \ \ i_{2,3,3} \ \ i_{2,4,3} \ \ i_{2,5,3}] & v = 3 \\ [i_{2,3,1} \ \ i_{2,4,1} \ \ i_{2,5,1} \ \ i_{2,3,2} \ \ i_{2,4,2} \ \ i_{2,5,2} \ \ i_{2,3,3} \ \ i_{2,4,3} \ \ i_{2,5,3} \ \ i_{2,3,4} \ \ i_{2,4,4} \ \ i_{2,5,4}] & v = 4 \end{cases}$$

*FIG. 12*

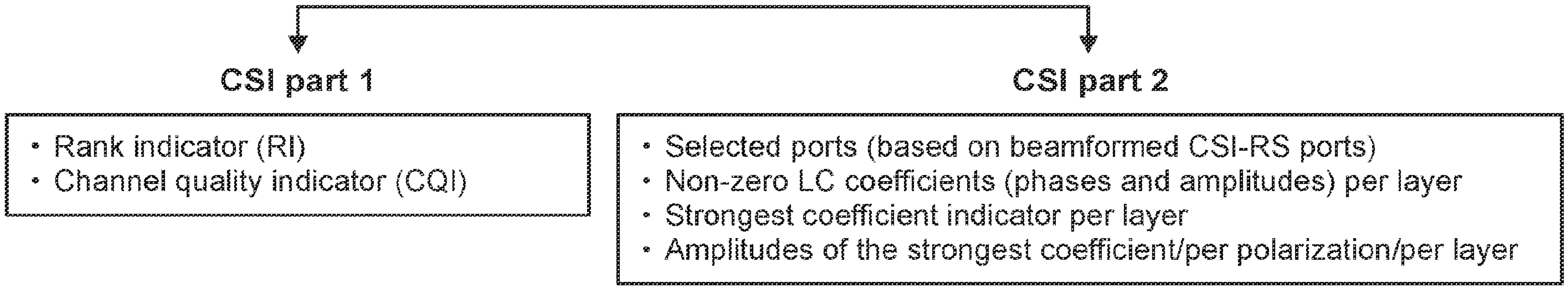


*FIG. 13*

| PMI Index | Associated CSI Part 2 Information |
|---|---|
| $i_{1,1}$ | Selected ports |
| $i_{1,8,l}$ | Strongest coefficient indicator for *l*-th layer |
| $i_{2,3,l}$ | Amplitude of the strongest coefficient of *l*-th layer |
| $i_{2,4,l}$ | Amplitudes of the reporting coefficients of *l*-th layer |
| $i_{2,5,l}$ | Phases of the reporting coefficients of *l*-th layer |

*FIG. 14*

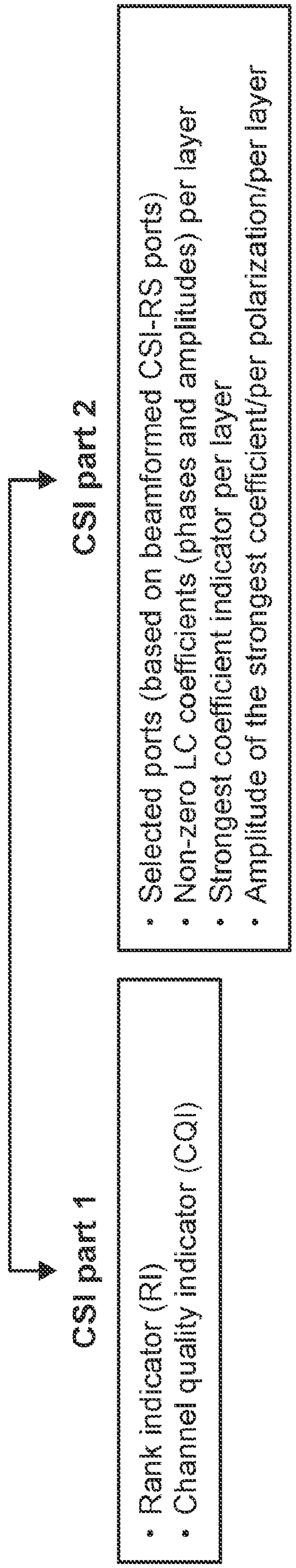
CSI part 1
• Rank indicator (RI)
• Channel quality indicator (CQI)
CSI part 2
• Selected ports (based on beamformed CSI-RS ports)
• Non-zero LC coefficients (phases and amplitudes) per layer
• Strongest coefficient indicator per layer
• Amplitude of the strongest coefficient/per polarization/per layer

*FIG. 15*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *3GPP RP 193133*, December 2019, vol. New WID: Further enhancements on MIMO for NR
- *3GPP RAN1 #104-e*, February 2021, vol. Chairman's Notes
- NR; Physical procedure for data (Release 16. *3GPP TS 38.214*